# EUROPÄISCHE PATENTANMELDUNG

(11) **EP 4 361 435 A1**
(43) Veröffentlichungstag der Anmeldung: **01.05.2024**
(21) Anmeldenummer: 22214522.9
(22) Anmeldetag: 19.12.2022
(51) Int. Cl.: F03D 9/00, F03D 9/25, F03D 9/39, F03D 9/37

(54) **WINDKRAFTANLAGE MIT VERTIKALER ACHSE**

(30) Priorität: 28.10.2022 DE 202022106071 U
(71) Anmelder: Baikovsky, Wassilij Wassiljewitsch, Sotschi, Region Krasnodar 354053 (RU); Demin SRM GmbH, 87657 Görisried (DE)
(72) Erfinder: BAIKOVSKY, Wassilij Wassiljewitsch, 354053 Sotschi, Region Krasnodar (RU); DEMIN, Evgeniy Nikolayevich, 87657 Görisried (DE)
(74) Vertreter: Jeck, Anton

(57) **Zusammenfassung**

Es wird eine Windkraftanlage mit einer vertikalen Rotorwelle (4) beschrieben. Diese umfasst:
- einen auf der Rotorwelle angeordneten Rotor (6),
- einen mittels der Rotorwelle antreibbaren Generator (3),
- einen zu einer mit der Achse der Rotorwelle (4) übereinstimmenden Mantelachse rotationssymmetrischen Mantel mit zumindest abschnittsweise konvergentem Querschnittsverlauf und
- eine entlang der Mantelachse angeordnete Wärmequelle (9).

## Beschreibung

Die Erfindung betrifft eine Windkraftanlage gemäß dem Oberbegriff des Anspruchs 1.

Die Erfindung bezieht sich auf die Windenergie, hauptsächlich auf Windkraft- oder Windenergieanlagen, insbesondere mit einer Leistung von 5 bis 100 kW. Die Erfindung kann verwendet werden, um gleichzeitig die kinetische Energie von Wind und aufsteigenden Luftströmen in elektrische Energie umzuwandeln. Dabei ist das technische Ergebnis die Steigerung des Ausnutzungsgrades der Windenergie und aufsteigender Luftströmungen, einschließlich und aufgrund der Bildung von Wirbelluftstrukturen.

Die beanspruchte technische Lösung bezieht sich insbesondere auf Windkraftanlagen mit mehreren Rotorblättern. Der sogenannte Tornadoturm ist eine Vorrichtung, die aus einem glockenförmigen Mantel, kurz einer Glocke, mit einer verengten Oberseite, einer Lastvorrichtung, beispielsweise einem Generator, einem Rotor, einer magnetischen Aufhängung des Rotorträgers, einer Gerätehalterung und einer Heizplatte besteht. Die Heizplatte wird von einer Batterie oder einer anderen Wärmeenergiequelle gespeist. Von dieser entsteht der notwendige Temperaturgradient für die Erzeugung aufsteigender Luftströme.

Das technische Ergebnis der Erfindung besteht darin, den Nutzungsgrad der Windenergie zusammen mit der Energie aufsteigender Luftströmungen zu erhöhen. Dies geschieht insbesondere durch die Erzeugung von Wirbelluftstrukturen im sogenannten Tornadoturm sowie durch die Verringerung der Anfangswindgeschwindigkeit für die Rotorrotation bis 0,2 m/s (stabiler Betrieb des Windgenerators sowohl bei niedrigen Windgeschwindigkeiten 2 - 5 m/s als auch bei böigem Wind bis 65 m/s).

Bekannt sind Windenergieanlagen mit vertikaler Drehachse, wie etwa der Darrieus-Rotor oder der Savonius-Rotor, sowie deren verschiedene Kombinationen.

Die Orientierung der Drehachse - kurz Achse - beschreibt dabei die Erstreckung der Rotorwelle. Die Rotorblätter können sich parallel oder normal zur Achse erstrecken.

Andere Orientierungen sind ebenfalls möglich, ebenso wie zur Rotorwelle hin geschlossene Kurven beschreibende Rotorblätter.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

Durch EP0046122B1 ist beispielsweise eine Windkraftanlage mit vertikaler Achse bekannt, welche sich parallel zur vertikalen Rotorwelle erstreckende Rotorblätter mit aerodynamischem Profil aufweist. Jedes der Rotorblätter ist um jeweils eine eigene in Bezug auf die Rotorwelle außermittige Vertikalachse schwenkbar zwischen zwei mit der Rotorwelle unverdrehbar verbundenen Begrenzungsplatten angeordnet. Eine windrichtungsabhängige, kontinuierliche Rotorblattverstellung ermöglicht es den Rotorblättern, über eine volle Umdrehung der Rotorwelle hinweg durch aerodynamischen Auftrieb ein Drehmoment zu erzeugen. Durch die Begrenzungsplatten wird der induzierte Strömungswiderstand (Wirbelschleppen) verringert.

Durch DE10218423A1 ist eine Windkraftanlage mit zwei in einem gemeinsamen Gehäuse angeordneten Rotoren mit vertikalen Achsen bekannt. Das gemeinsame Gehäuse ist windrichtungsabhängig um eine ebenfalls vertikale Drehachse schwenkbar.

Durch EP2610483A1 ist eine Windkraftanlage mit vertikaler Achse bekannt, Diese weist sich parallel zur vertikalen Rotorwelle erstreckende Rotorblätter symmetrischen Querschnitts auf. Diese sind ebenfalls jeweils um eine eigene in Bezug auf die Rotorwelle außermittige Vertikalachse schwenkbar. Eine windrichtungsabhängige, kontinuierliche Rotorblattverstellung erlaubt eine Drehmomenterzeugung durch unterschiedliche Anstellwinkel und hieraus resultierenden unterschiedlichen Luftwiderständen der Rotorblätter.

Durch DE102009028946A1 ist eine Windkraftanlage mit vertikaler Achse bekannt. Das Funktionsprinzip nutzt unterschiedliche Luftwiderstände der mit und der gegen den Wind laufenden Rotorblätter. Die Rotorblätter erstrecken sich normal zur Rotorwelle in horizontaler Richtung. Die Rotorblätter sind paarweise um jeweils eine eigene Horizontalachse verschwenkbar angeordnet. Jedes Rotorblatt ist um seine Horizontalachse zwischen zwei Endpositionen verschwenkbar: Rotorblätter vor dem Wind nehmen jeweils eine Segelstellung mit maximalem Luftwiderstand ein. Rotorblätter gegen den Wind verschwenken jeweils in eine Ruhestellung mit minimalem Luftwiderstand.

Durch DE102013003152A1 ist eine Windkraftanlage mit vertikaler Achse und mit um jeweils eigene, in Bezug auf die Rotorwelle außermittige Vertikalachsen schwenkbaren Rotorblättern bekannt. Die Funktionsweise beruht auf einer Kombination aus Luftwiderstand vor dem Wind und aerodynamischem Auftrieb am Wind. Die am und vor dem Wind laufenden Rotorblätter müssen genügend Drehmoment erzeugen, um das gegen den Wind laufende Rotorblatt zu stemmen.

Durch GB2296048A ist eine Windkraftanlage mit vertikaler Achse und mit um eigene, in Bezug auf die Rotorwelle außermittige Vertikalachsen schwenkbar angeordneten Rotorblättern mit symmetrischem aerodynamischem Profil bekannt. Eine zyklische Rotorblattverstellung erlaubt eine kontinuierliche Drehmomenterzeugung.

Durch DE102005029922A1 und durch KR100801466B1 sind auch Windkraftanlagen mit vertikaler Rotationsachse bekannt. Diese arbeiten unter dem Einfluss von Luftströmungen von vorbeifahrenden Fahrzeugen.

Allen oben genannten Windkraftanlagen mit vertikaler Rotationsachse ist gemein, dass sie aus der Bewegung des Windes arbeiten. Ihre Leistung und Effizienz hängt von der Windgeschwindigkeit ab. Um den Betrieb solcher Windkraftanlagen aufzunehmen, ist eine Windgeschwindigkeit von mindestens 5 m/s erforderlich. Dadurch wird der Wirkungsgrad solcher Windgeneratoren erheblich reduziert. Darüber hinaus nutzen diese oben aufgeführten Arten von Windkraftanlagen nicht die Möglichkeiten aufsteigender Luftströmungen, die sich aufgrund des Druckunterschieds zwischen niedrigen und hohen Luftschichten oder aufgrund eines Temperaturunterschieds in den unteren und oberen Luftschichten bilden.

Es sind auch thermische Energiegeneratoren bekannt, wie beispielsweise in US 2015/008994.6 A1 beschrieben. Diese nutzen die Energie von aufsteigenden Luftströmen aufgrund des Temperaturunterschieds im unteren und oberen Teil solcher Generatoren. Wesentliche Nachteile solcher Generatoren sind ihr geringer Wirkungsgrad, da Windenergie nicht genutzt wird, und ihre schwierige Wartung.

Durch EP 1961956A1, US4508973, US4070131 sind auch Windturbinen mit vertikaler Rotationsachse vom Typ Tornado bekannt. Diese Windturbinen sind in der Lage, bei niedrigen Windgeschwindigkeiten zu arbeiten. Nachteilig an ihnen ist ihre sehr komplizierte Konstruktion und ihre großen Abmessungen.

Eine durch RU 2012142299A bekannte und kurz als Prototyp bezeichnete nächstliegende technische Lösung erlaubt eine gleichzeitige Nutzung sowohl der Windkraft als auch aufsteigender Luftströmungen. Unter bestimmten Bedingungen ist es möglich, tornadoartige Wirbelströmungen in dem Windgenerator zu erzeugen.

Im Prototyp wird der Windgenerator in Form eines Leitschaufelturms, eines Wärmeenergiespeichers, eines rotierenden Rotors mit Blättern dargestellt. Der Turm wird aus zwei vertikal aufstehenden Leitschaufelblöcken und einem zwischen ihnen angeordneten Rotorblock gebildet. Im Rotorblock ist eine als Zentrifugalventilator bezeichnete doppelwirkende Radialturbine angeordnet. Der Lufteintritt in die Turbine erfolgt entlang der vertikalen Turmachse durch einen zentralen Einströmkanal. Dies geschieht einmal von oben nach unten vom oberen Leitschaufelblock in den oberen Teil der doppelwirkenden Radialturbine und einmal von unten nach oben vom unteren Leitschaufelblock in den unteren Teil der doppelwirkenden Radialturbine. Der Luftaustritt aus der Turbine erfolgt im Rotorblock radial nach außen. Die Strömungsbegrenzung innerhalb der Turbine erfolgt durch zwei trichterförmige Flächen. Der Durchmesser des zentralen Lochs dieser Flächen entspricht dem Außendurchmesser der Hochdruckbereiche in der rotierenden Gasströmung. Zwischen diesen beiden Flächen befindet sich ein Druckflächenteiler in Form eines zylindrischen Körpers mit konkaven Flächen. Der Durchmesser des zentralen zylindrischen Lochs entspricht dem Durchmesser des Niederdruckbereichs der rotierenden Gasströmung. Ein Wasserbecken in Form eines wärmeisolierten, mit Wasser gefüllten Beckens mit einem transparenten Dach zum Heizen befindet sich in der Umgebung des Turms. Es dient als solar beheizter, thermischer Energiespeicher. Das darin enthaltene Wasser wird durch Sonneneinstrahlung beheizt. Im Becken befindet sich ein Wärmetauscher. Ein Strömungskanal führt von außerhalb des Turms durch den Wärmetauscher und mündet in Richtung der Turmachse von unten her in den Turm. Bei Windstille wird kalte Luft erwärmt, indem sie durch den Strömungskanal in den Turm eintritt und in diesem aufsteigt. Von unten kommend tritt sie in den unteren Teil der doppelwirkenden Radialturbine ein und treibt diese an. Durch seinen Luftwiderstand bremst der obere Teil der doppelwirkenden Radialturbine in diesem Betriebszustand und trägt nicht zur Drehmomenterzeugung bei. Überschüssige elektrische Energie kann mittels eines Heizelements ebenfalls zur Erwärmung des Wassers herangezogen werden. Der Rotor wird an seinem Umfang magnetisch in der Schwebe gehalten. In der horizontalen Ebene wird der Rotor durch Rollen gegen Verschieben gesichert.

Der Prototyp weist alle Nachteile der in den voranstehenden Dokumenten beschriebenen Windkraftanlagen auf, wie beispielsweise Sperrigkeit und Konstruktionskomplexität.

Eine Aufgabe der vorliegenden Erfindung besteht darin, das Design des Windgenerators zu vereinfachen und die Energieeffizienz zu erhöhen. Dabei wird der Tornado-Effekt erzeugt, und zwei Arten kinetischer Energie werden kombiniert - Windenergie und die Energie aufsteigender Luftströmungen. Dadurch ergibt sich die Möglichkeit, den Windgenerator bei Windstille zu starten sowie einen unterbrechungsfreien Betrieb sowohl bei minimalen als auch bei maximalen Windgeschwindigkeiten zu gewährleisten.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Um die Wechselwirkung zwischen der Windkraftanlage und dem Luftstrom zu erhöhen, können Wirbelstrukturen verwendet werden. Diese werden sowohl in der freien

Atmosphäre als auch in speziellen Kanälen erzeugt. Solche Generatoren einer Wirbelströmung ähneln in ihren Eigenschaften einem natürlichen Tornado, der über eine erhebliche Reserve an kinetischer Energie verfügt.

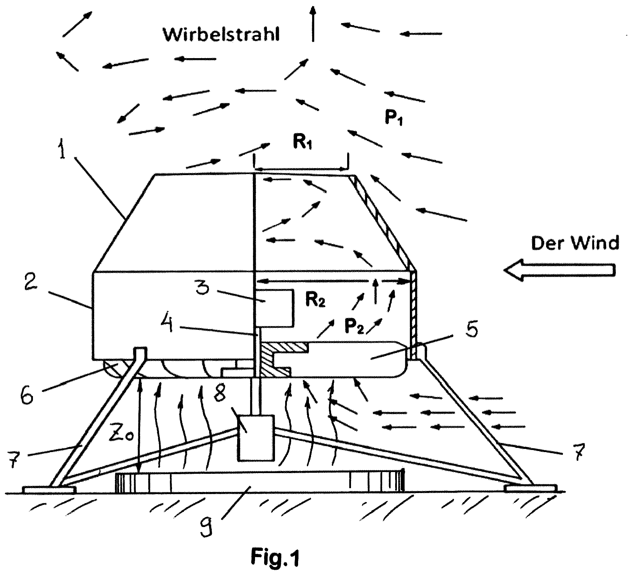

Eine der am weitesten entwickelten Konstruktionen eines Windgenerators mit Wirbelstrukturen und begrenzt durch Wände ist eine vertikalaxiale Propellerwindkraftanlage, über der sich ein Tornadoturm befindet (Fig 1). Der verwirbelte Luftstrom tritt durch verstellbare Leitschaufeln in das Innere des Turms ein. In der axialen Zone des Wirbels treten eine starke Verdünnung und hohe Winkelgeschwindigkeiten auf.

Dadurch werden zusätzliche Luftmassen aus der Umgebung angesaugt. Infolgedessen übersteigt die Geschwindigkeit vor dem Windrad die Geschwindigkeit der atmosphärischen Strömung erheblich. Hinter dem Windrad selbst entsteht eine erhebliche Verdünnung, die das Anziehen neuer Luftmassen mit sich bringt.

Die Hauptantriebskräfte in der Strömungs- und Gasmechanik entsprechen dem Eulerschen Gleichungssystem der Gasmechanik, das eine solche gasdynamische Strömung als Wirbelsturm - Tornado - beschreibt. Dieses System beinhaltet die Erhaltungssätze von Impuls, Materie und Energie.

Gemäß diesen Gleichungen wurden mathematische Berechnungen der Gesamtabmessungen des Windgenerators durchgeführt und die Höhe des Windgenerators relativ zu der Oberfläche der als Thermopaneel (thermisches Paneel) bezeichneten Wärmequelle berechnet.

Wirbelwind-Tornado ist eine schnell rotierende Luftsäule mit sich änderndem Durchmesser. Die Windgeschwindigkeit im Tornado erreicht Hunderte von Metern pro Sekunde. Um die Luft auf eine solche Geschwindigkeit zu drehen, muss ein äußeres Kraftmoment aufgebracht werden. Um dieses Phänomen zu erklären, wurde in der Studie das Impulserhaltungsgesetz verwendet.

Um die Wirkung eines Tornados in einem geschlossenen Raum zu erzeugen, ist es notwendig, das System mit Energie aus einer externen Quelle zu speisen. Diese ist im Tornadoturm ein mehrblättriger Propellerrotor, der für den Aufstieg und die Übertragung der Luftmassen zum Tornadoturm aufgrund der Bewegung von Wind und aufsteigenden Luftströmungen sorgt.

Zusätzliche, über die vollständige Lösung der gestellten Aufgabe und/oder über die zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen. Einige Formen sind vereinfacht und andere Formen zur besseren Veranschaulichung vergrößert im Verhältnis zu anderen Elementen dargestellt. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann. Sie stellen keine abschließende Begrenzung dar. Es zeigen in schematischer Darstellung:
- Fig. 1: eine Gesamtansicht der Windkraftanlage und
- Fig. 2: eine Gesamtansicht einer als Thermopaneel oder Heizplatte ausgeführten und teils auch als Thermopaneel oder Heizplatte bezeichneten Wärmequelle mit Segmenten.

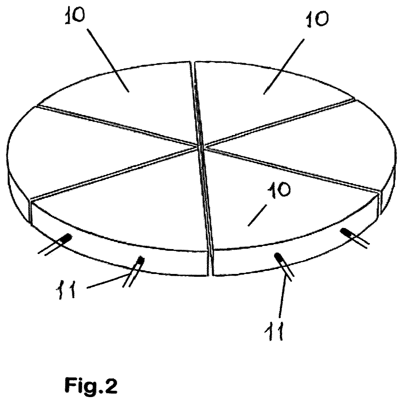

Eine in Fig. 1 und Fig. 2 ganz oder in Teilen dargestellte Windkraftanlage umfasst:
- einen auf der Rotorwelle 4 angeordneten Rotor 6,
- einen mittels der Rotorwelle 4 antreibbaren Generator 3,
- einen vorteilhaft den Rotor 6 zumindest teilweise umgebenden und zu einer mit der Achse der Rotorwelle 4 übereinstimmenden Mantelachse rotationssymmetrischen, sich zumindest abschnittsweise von unten nach oben verjüngenden Mantel, entsprechend mit zumindest abschnittsweisem, aus Sicht einer aufsteigenden Luftströmung konvergentem Querschnittsverlauf und
- eine entlang der Mantelachse angeordnete Wärmequelle 9.

Die Windkraftanlage verfügt demnach über einen vorteilhaft zumindest den Rotor 6 konzentrisch zur Rotorwelle 4 umgebenden Mantel in Form eines Rotationskörpers.

Dessen Achse stimmt mit der Rotorwelle 4 und mit einem zumindest abschnittsweise entlang der Rotorwelle 4 - gesehen von unten nach oben - konvergenten Querschnittsverlauf überein.

Der Mantel kann dabei den Rotor 6 in dessen durch die Breite der Rotorblätter 5 vorgegebenen Höhe vollständig oder nur teilweise umgeben. In Fig. 1 umgibt er den Rotor 6 in dessen Höhe in etwa zur Hälfte der Breite der Rotorblätter 5 und demnach nur teilweise.

Die Anordnung entlang der Mantelachse sieht nicht zwingend eine Erstreckung der Wärmequelle entlang der Mantelachse vor. Wesentlich ist, dass sich die Wärmequelle bei einer senkrechten Draufsicht auf den Mantel von oben innerhalb der vom Mantel eingenommenen Projektionsfläche auf den Boden befindet. Die Wärmequelle kann dabei grundsätzlich in Strömungsrichtung einer innerhalb des Mantels entlang der Mantelachse aufsteigenden Luftströmung angeordnet sein.

Die Wärmequelle 9 kann eine Heizplatte umfassen, die von einer Batterie betrieben ist.

Die Wärmequelle 9 nimmt vorteilhaft zumindest eine von den Rotorblättern 5 definierte, sich normal zur Mantelachse erstreckende Fläche ein. Auf der Fläche steht die Mantelachse senkrecht auf.

Am Rotor 6 können mehrere Rotorblätter 5 angeordnet sein.

Die Rotorblätter 5 erstrecken sich vorteilhaft vertikal beziehungsweise normal zur Rotorwelle 4.

Die Rotorblätter 5 verfügen vorteilhaft über ein Profil, welches bei einer im Wesentlichen horizontalen Anströmung normal zur Rotorwelle 4 aus gegenüberliegenden Richtungen unterschiedliche Luftwiderstände aufweist. Hierdurch wird sichergestellt, dass auch bei einer Anströmung eines freien, nicht vom Mantel umgebenen Teils des Rotors 6 dieser in Rotation versetzt wird. Ein geeignetes Schaufelprofil ist beispielsweise blütenblattförmig. Rotorblätter mit einem solchen Schaufelprofil sind auch als konkave Blütenblätter beschreibbar. Ein solches radial von der Rotorwelle 4 abstehendes Rotorblatt 5 ist auf seiner in Rotationsrichtung nach vorn laufenden Vorderseite konvex ausgebildet. Auf seiner gegenüberliegenden, in Rotationsrichtung gesehen rückwärts laufenden Rückseite ist das Rotorblatt 5 konkav ausgebildet.

Vorteilhaft hat der Mantel ein Oberteil 1 und ein Unterteil 2.

Vorteilhaft weist das auch als Glocke bezeichnete oder glockenförmig beschreibbare Oberteil 1 einen in Richtung der entlang der Mantelachse von unten nach oben aufsteigenden Luftströmung konvergenten Querschnittsverlauf auf. Dagegen hat das Unterteil 2 einen konstanten, zylinderförmigen Querschnitt.

Die Windkraftanlage hat vorteilhaft einen zumindest den Mantel tragenden Geräteträger 7.

Vorzugsweise ist der Mantel gegenüber dem Erdboden beabstandet angeordnet.

Die Windkraftanlage ist darüber hinaus vorteilhaft mit einem Rotorträger 8 ausgestattet.

Der Rotorträger 8 kann eine magnetische Aufhängung umfassen.

Vorteilhaft ist der Rotor 6 magnetisch aufgehängt.

Es ist ersichtlich, dass die Erfindung beispielsweise durch eine mehrflügelige Windkraftanlage mit vertikaler Rotationsachse verwirklicht sein kann. Die Windkraftanlage besteht aus einer den Mantel oder einen Teil desselben beschreibenden oder durch den Mantel oder einen Teil desselben gebildete Glocke mit verengter Oberseite, einem Generator 3, einem Rotor 6, einer magnetischen Aufhängung, einem Rotorträger 8, Geräteträgern 7 und einer Heizplatte 9. Diese wird als Wärmequelle von einer Batterie oder einer anderen Energiequelle betrieben.

Bei einer solchen oder bei einer der voranstehend beschriebenen Windkraftanlagen kann zur Vereinigung der kinetischen Energie des Windes und der aufsteigenden Luftströmungen die durch eine Heizplatte 9 gebildete oder eine Heizplatte 9 umfassende Wärmequelle 9 direkt unter dem Unterteil 2 des Mantels angeordnet sein. Diese durch eine Heizplatte 9 gebildete oder eine Heizplatte 9 umfassende Wärmequelle 9 kann durch Elektroheizungen 11 mit geringer Leistung in Kombination mit Solarenergie beheizt sein oder werden. Darüber hinaus kann die durch eine Heizplatte 9 gebildete oder eine Heizplatte 9 umfassende Wärmequelle 9 mit einer Flüssigkeit mit geringer spezifischer Wärme gefüllt sein.

Vorteilhaft beträgt der Temperaturunterschied zur Erzeugung aufsteigender Wärmeströme zwischen der Oberfläche der beispielsweise als Heizpaneel 9 oder Thermopaneel 9 bezeichneten, durch eine Heizplatte 9 gebildeten oder eine Heizplatte 9 umfassenden Wärmequelle 9 und dem Unterteil 2 des Mantels mindestens 5 Grad.

Der Abstand zwischen der Oberfläche der als Heizpaneel 9 oder Thermopaneel 9 bezeichneten Wärmequelle 9 und dem Unterteil 2 des Mantels beträgt vorteilhaft das 0,4- bis 1,2-fache der Höhe des als Glocke bezeichneten Oberteils 1 des Mantels (Tornadoturm).

Vorteilhaft überragen die Rotorblätter 5 die Begrenzungen des Unterteils 2 des Mantels um etwa die Hälfte ihrer Breite.

Die Fläche der als Heizpaneel 9 oder Thermopaneel 9 bezeichneten Wärmequelle 9 beträgt bevorzugt 80 - 90% der Fläche des Unterteils 2 des Mantels.

Das technische Ergebnis, das durch die Verwendung der erfindungsgemäßen Windkraftanlage erzielt wird, besteht darin, dass die auch als Windgenerator bezeichnete Windkraftanlage (Fig.1) einen glockenförmigen Mantel (Tornado-Turm) aufweist. Dieser ist in Form eines Zylinders mit sich abschnittsweise von unten nach oben verjüngendem Querschnitt ausgeführt. Der Mantel geht in einen als Glocke 1 bezeichneten oberen Teil 1 des Mantels in einen Kegelstumpf über. Ein Rotor 6 mit einer sich entlang der Mantelachse erstreckenden Rotorwelle 4 verfügt über Rotorblätter 5, vorzugsweise in Form von konkaven Blütenblättern. Die Rotorblätter 5 können die Begrenzungen des Unterteils 2 des Mantels um etwa die Hälfte ihrer Breite überragen. Beispielsweise ist am oberen Ende der Rotorwelle 4 ein Generator 3 angeordnet. Die Rotorwelle 4 ist direkt und/oder durchgehend mit dem Generator 3 verbunden. Alternativ kann eine magnetische Kopplung von Generator 3 und Rotorwelle 4 vorgesehen sein. Alternativ oder zusätzlich kann ein Getriebe zwischen der Rotorwelle 4 und dem Generator 3 angeordnet sein. Eine auch als Rotorträger bezeichnete untere Rotorhalterung 8 ist vorteilhaft magnetisch aufgehängt, um Beschädigungen und den Austausch von Lagern zu verhindern.

Um das technische Ergebnis zu gewährleisten, wird an den Geräteträgern 7 oder direkt auf dem Boden unter dem Mantelunterteil 2 eine als Thermopaneel 9 bezeichnete Wärmequelle 9, beispielsweise mit leistungsschwachen Heizgeräten 11 (Fig. 2), installiert. Dieses Thermopaneel 9 erwärmt die Luft unter der Unterseite des Mantels. Dort befinden sich die hervorstehenden Rotorblätter 5, um eine Temperatur- und Druckdifferenz (P1 und P2) zwischen der Unterseite und der Oberseite 1 des Mantels zu erzeugen. Solche Bedingungen sind notwendig, um aufsteigende Luftströme zu erzeugen, die den Betrieb des Rotors 6 bei leichtem oder keinem Wind gewährleisten. Die Wärmequelle 9, beispielsweise die Heizgeräte 11, schalten sich automatisch ein, wenn die Windgeschwindigkeit auf einen kritischen Wert abfällt. Sie schaltet sich aus, wenn der Windgenerator im Tornado-Modus arbeitet oder wenn die Windgeschwindigkeit ausreichend ist.

Die beispielsweise als Heizplatte ausgeführte, auch als Thermoplatte oder Thermopaneel 9 bezeichnete Wärmequelle 9 besteht aus Segmenten 10. Die Segmente 10 sind mit einer Flüssigkeit mit geringer spezifischer Wärme, wie z. B. Frostschutzmittel, mit einer Gefriertemperatur über dem Minimum für den Bereich, in dem solche Windkraftanlagen installiert sind, gefüllt (Fig. 2). Die dermaßen als Wärmespeichersegmente 10 ausgeführten Segmente 10 bestehen aus Metall oder Kunststoff. Deren Gesamtfläche sollte 80 - 90 % der Fläche des Schaftunterteils betragen. Die Oberseite der Segmente bzw. die Segmente des Thermopaneels 9 selbst müssen schwarz sein, um zusätzlich Sonnenenergie zu speichern. Die Unterseite der Segmente muss isoliert oder auf eine Isolierunterlage gelegt werden, um die Wärmeübertragung von der Thermoplatte zum Boden zu reduzieren. Der rechnerische Abstand (Z0) von der Oberfläche der Wärmespeichersegmente 10 bis zur Unterseite 2 des Mantels sollte mindestens 0,4 und höchstens 1,2 der Glockenhöhe (Tornadoturm) betragen.

Die Rotorblätter 5 sind bevorzugt so angeordnet, dass die Hälfte der Blattbreite innerhalb der Glocke 1 und die zweite Hälfte außerhalb der Glocke 1 liegt und für den Wind zur Verfügung steht (Fig. 1).

Vorteilhaft können die Rotorblätter 5 so angeordnet sein, dass die Hälfte der Blattbreite innerhalb des Mantels und die zweite Hälfte außerhalb des Mantels liegt und für den Wind zur Verfügung steht (Fig1).

Der Neigungswinkel der Rotorblätter 5 wird in Abhängigkeit von der spezifischen Leistung des Generators 3 berechnet, um maximale Bedingungen für die Drehung des Rotors 6 bei der Bildung aufsteigender Luftströme zu schaffen.

Wenn der Wind über den Vorsprung der Rotorblätter 5 bläst, beginnt sich die Rotorwelle 4 zu drehen. Dadurch entsteht im unteren Teil und im Oberteil 1 des Mantels aufgrund der Bildung einer entsprechenden Wirbelströmung ein Unterschied in den Windströmungsgeschwindigkeiten der Bernoulli-Gleichung. Aus dieser folgt, dass der Druck am Boden höher ist als am oberen Teil P2 > P1 .Dadurch entsteht ein Vakuum (Unterdruck), was zu einem zusätzlichen Luftstrom durch den Rotor 6 führt. Dies führt zu einer Erhöhung der Rotationsfrequenz des Rotors 6 und damit zu einer Erhöhung der Energieindikatoren der Umwandlung von Windenergie in die kinetische Energie des Rotors 6.

Nachfolgend die berechneten Daten für einen Windgenerator nach der vorgeschlagenen technischen Lösung mit einer Leistung von bis zu 10 kW bei einer Windgeschwindigkeit von 15 m/s und mit zwei Asynchrongeneratoren:
- Das Gehäuse des Windgenerators hat die Form eines Zylinders mit einem Durchmesser von 2200 mm und einer Höhe von 650 mm, der sich in einen Kegelstumpf mit einem oberen Durchmesser von 800 mm und einer Höhe von 750 mm verwandelt.
- Der Rotordurchmesser mit Blättern in Form von konkaven Blütenblättern beträgt 2000 mm, der Rotordurchmesser ohne Blätter 600 mm.
- Der Überstand der Rotorblätter vom unteren Teil des Mantels beträgt 60 mm, die Doppelwelle des Rotors ist direkt und/oder über ein Magnetgetriebe im oberen Teil mit einem Block von Induktionsgeneratoren verbunden.
- Der Durchmesser der Thermopaneelbaugruppe beträgt 1900 mm.
- Der Abstand von der Plattenoberfläche bis zum Boden des Rotors beträgt 650 mm.

Die Fläche des Thermopaneels 9 sollte nicht weniger als 80 % der Fläche des unteren Teils des Rotors 6 betragen, da der Temperaturunterschied zwischen der Oberfläche des Thermopaneels 9 und dem unteren Teil des Mantels möglicherweise nicht ausreicht, um starke Aufwärtsströmungen zu bilden, die den Rotor 6 mit Rotorblättern 5 antreiben können.

Eine Vergrößerung der Fläche des Thermopaneels 9 um mehr als 90 % der Fläche des Unterteils 2 des Mantels führt zu erheblichen Wärmeverlusten.

Der Temperaturunterschied zwischen der Oberfläche des Thermopaneels 9 und der Unterseite des Mantels muss mindestens 5 Grad betragen, um die Bildung aufsteigender Luftströme zu gewährleisten. Die Temperatur der Flüssigkeit in den Segmenten 10 darf den Siedepunkt dieser Flüssigkeit nicht überschreiten. Außerdem sollte die Wirtschaftlichkeit einer hohen Heiztemperatur des Thermopaneels 9 in Abhängigkeit von der Region und der Außenlufttemperatur berücksichtigt werden.
Wie mathematische Berechnungen zeigen, ist der Abstand (Z0) von der Oberfläche der Wärmespeichersegmente 10 zum Unterteil 2 des Mantels kleiner als 0,4 und größer als 1,2 der Höhe des Mantels (Tornadoturm). Dies ist nicht genug für die Entstehung vorgesehen ausreichend starke aufsteigende Luftströme, die den Rotor 6 mit Rotorblättern 5 in Bewegung setzen können.

Die obere Hälfte der Rotorblätter 5 muss sich innerhalb des Unterteils 2 des Mantels befinden, die zweite Hälfte außerhalb des Mantels und für den Wind zur Verfügung stehen. Diese Anordnung der Rotorblätter 5 wird gewählt, um Bedingungen für die Bildung von Wirbelströmungen innerhalb des Windgeneratorgehäuses zu schaffen (Fig. 1).

Die Erfindung ist nicht durch die Beschreibung anhand der Ausführungsbeispiele beschränkt. Vielmehr umfasst die Erfindung jedes neue Merkmal sowie jede Kombination von Merkmalen. Dieses beinhaltet insbesondere jede Kombination von Merkmalen in den Ansprüchen, auch wenn dieses Merkmal oder diese Kombination selbst nicht explizit in den Ansprüchen oder Ausführungsbeispielen angegeben ist.

Die Erfindung ist insbesondere im Bereich der Nutzbarmachung von Windenergie zur Erzeugung elektrischer und/oder mechanischer Energie gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1.: Glocke / Oberteil (des Mantels)
- 2.: Mantelunterteil / Unterteil (des Mantels)
- 3.: Generator
- 4.: Rotorwelle
- 5.: Rotorblatt
- 6.: Rotor
- 7.: Geräteträger
- 8.: Rotorhalterung / Rotorträger
- 9.: Thermopaneel / Wärmequelle / Heizplatte / Heizpaneel
- 10.: Segment / Wärmespeichersegment
- 11.: Heizgerät

## Patentansprüche

1. Windkraftanlage mit einer vertikalen Rotorwelle (4), mit:
- einem Rotor (6),
- einem Generator (3),
- einem zu einer mit der Rotorwelle (4) übereinstimmenden Mantelachse rotationssymmetrischen, sich zumindest abschnittsweise von unten nach oben verjüngenden Mantel und
- einer entlang der Mantelachse angeordneten Wärmequelle (9).

2. Windkraftanlage nach Anspruch 1,
**dadurch gekennzeichnet,**
**dass** die Wärmequelle (9) eine Heizplatte umfasst, die von einer Batterie betrieben ist.

3. Windkraftanlage nach Anspruch 1 oder 2,
**dadurch gekennzeichnet,**
**dass** die Wärmequelle (9) zumindest eine von den Rotorblättern (5) überstrichene, sich normal zur Mantelachse erstreckende Fläche einnimmt.

4. Windkraftanlage nach Anspruch 1, 2 oder 3,
**dadurch gekennzeichnet,**
**dass** am Rotor (6) mehrere Rotorblätter (5) angeordnet sind.

5. Windkraftanlage nach Anspruch 4,
**dadurch gekennzeichnet,**
**dass** sich die Rotorblätter (5) normal zur Rotorwelle (4) erstrecken.

6. Windkraftanlage nach einem der voranstehenden Ansprüche,
**dadurch gekennzeichnet,**
**dass** der Mantel ein Oberteil (1) und ein Unterteil (2) aufweist.

7. Windkraftanlage nach Anspruch 6,
**dadurch gekennzeichnet,**
**dass** das Oberteil (1) einen in Richtung einer entlang der Mantelachse von unten nach oben aufsteigenden Luftströmung konvergenten Querschnittsverlauf und das Unterteil (2) einen konstanten, zylinderförmigen Querschnitt hat.

8. Windkraftanlage nach einem der voranstehenden Ansprüche,
**dadurch gekennzeichnet,**
**dass** sie einen zumindest den Mantel tragenden Geräteträger (7) aufweist.

9. Windkraftanlage nach einem der voranstehenden Ansprüche,
**dadurch gekennzeichnet,**
**dass** der Mantel gegenüber dem Erdboden beabstandet angeordnet ist.

10. Windkraftanlage nach einem der voranstehenden Ansprüche,
**dadurch gekennzeichnet,**
**dass** sie einen Rotorträger (8) aufweist.

11. Windkraftanlage nach Anspruch 10,
**dadurch gekennzeichnet,**
**dass** der Rotorträger (8) eine magnetische Aufhängung umfasst.

12. Windkraftanlage nach einem der voranstehenden Ansprüche,
**dadurch gekennzeichnet,**
**dass** zur Vereinigung der kinetischen Energie des Windes und der aufsteigenden Luftströmungen die Heizplatte (9) direkt unter dem Unterteil (2) angeordnet ist, und
**dass** diese Heizplatte (9) durch Elektroheizungen (11) mit geringer Leistung in Kombination mit Solarenergie beheizt und mit einer Flüssigkeit mit geringer spezifischer Wärme gefüllt ist.

13. Windkraftanlage nach einem der voranstehenden Ansprüche,
**dadurch gekennzeichnet,**
**dass** zur Erzeugung aufsteigender Wärmeströme der Temperaturunterschied zwischen der Oberfläche der Heizplatte (9) und dem Unterteil (2) mindestens 5 Grad beträgt.

14. Windkraftanlage nach einem der voranstehenden Ansprüche,
**dadurch gekennzeichnet,**
**dass** der Abstand zwischen der Oberfläche des Heizpaneels (9) und dem Unterteil (2) des Mantels 0,4 - 1,2 der Höhe des Oberteils (1) des Mantels beträgt (Tornadoturm).

15. Windkraftanlage nach einem der voranstehenden Ansprüche,
**dadurch gekennzeichnet,**
**dass** die Rotorblätter (5) die Begrenzungen des Unterteils 2 des Mantels um etwa die Hälfte ihrer Breite überragen.
